(19) Europäisches Patentamt
European Patent Office
Office européen des brevets

(11) **EP 2 682 803 A2**

(12) **DEMANDE DE BREVET EUROPEEN**

(43) Date de publication:
**08.01.2014 Bulletin 2014/02**

(51) Int Cl.:
***G02B 27/01*** *(2006.01)*    ***G02B 27/04*** *(2006.01)*

(21) Numéro de dépôt: **13186599.0**

(22) Date de dépôt: **04.07.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2010 FR 1055779**

(62) Numéro(s) de document de la (des) demande(s) initiale(s) en application de l'article 76 CBE:
**11728879.5 / 2 593 828**

(71) Demandeur: **Delphi Technologies, Inc.
Troy MI 48007 (US)**

(72) Inventeurs:
• **Moussa, Hassan
67400 Illkirch (FR)**

• **Simon, Claude
67115 Plobsheim (FR)**
• **Guidi, Alain
68230 Turckheim (FR)**

(74) Mandataire: **Robert, Vincent et al
Delphi France SAS
Bât. le Raspail - ZAC Paris Nord 2
22, avenue des Nations
CS 65059 Villepinte
95972 Roissy CDG Cedex (FR)**

Remarques:
Cette demande a été déposée le 30-09-2013 comme demande divisionnaire de la demande mentionnée sous le code INID 62.

(54) **Dispositif d'affichage tête haute ajustable**

(57) Un dispositif d'affichage tête haute (10) comprend un projecteur (12) pour générer un faisceau lumineux chargé d'une information à afficher, un combineur (20) ayant une position d'affichage pour afficher l'information dans le champ de vision d'un utilisateur et un système optique définissant un chemin optique entre le projecteur et le combineur lorsque celui-ci se trouve dans sa position d'affichage, pour diriger le faisceau lumineux sur le combineur. Le système optique comprend un premier et un deuxième miroir de déviation. Le premier miroir (22) est agencé pour recevoir le faisceau lumineux du projecteur et le renvoyer vers le deuxième miroir (24), celui-ci étant agencé pour renvoyer le faisceau lumineux sur le chemin optique vers le combineur. Un système d'actionnement est prévu pour ajuster la longueur du chemin optique entre le projecteur et le combineur par positionnement des premier et deuxième miroirs de déviation.

Fig. 1

EP 2 682 803 A2

## Description

### Domaine technique

La présente invention concerne un dispositif d'affichage tête haute (en anglais : « head up display »), notamment pour véhicules automobiles, camions, bus, trains, avions etc. En particulier, l'invention concerne un dispositif d'affichage tête haute à combineur escamotable.

### Etat de la technique

Un dispositif d'affichage tête haute comporte typiquement une unité de projection qui produit un faisceau lumineux destiné à être dirigé vers un combineur en vue de projeter des images, notamment des informations de fonctionnement ou de conduite d'un véhicule, sous la forme d'une image virtuelle, dans le champ de vision d'un utilisateur, notamment d'un pilote ou conducteur de véhicule automobile.

Conçus à l'origine pour l'affichage d'informations à des pilotes d'avion de combat, les dispositifs d'affichage tête haute sont aujourd'hui de plus en plus utilisés notamment dans le secteur automobile, plus particulièrement dans les voitures de moyenne et haute gamme. Les dispositifs d'affichage tête haute sont réputés contribuer à la sécurité de la route car ils permettent aux conducteurs de lire les informations sans quitter des yeux la route devant eux. L'image virtuelle contenant les informations affichées est en outre projetée à une distance de quelques mètres devant le conducteur ce qui lui permet de lire les informations sans modification de l'accommodation des yeux.

Il existe des dispositifs d'affichage tête haute qui utilisent une partie du pare-brise comme combineur, c.-à-d. comme l'élément optique qui combine le faisceau lumineux contenant les informations devant être présentées à l'utilisateur avec la lumière provenant de l'environnement. D'autres dispositifs d'affichage tête haute comportent un combineur indépendant du pare-brise. Un tel combineur comprend une lame ayant les propriétés optiques nécessaires pour dévier au moins une partie substantielle du faisceau provenant de l'unité de projection vers l'utilisateur, tout en étant assez transparente pour laisser passer en même temps une partie substantielle de la lumière ambiante provenant de l'environnement.

Il s'est avéré souhaitable de pouvoir protéger les éléments optiques du dispositif d'affichage tête haute, par exemple contre la poussière et d'autres influences nuisibles, risquant de détériorer la qualité de la projection.

Un autre problème est l'ajustage du dispositif d'affichage tête haute aux besoins du conducteur. Notamment parce que l'angle de vision (l'angle par rapport à la direction nominale jusqu'auquel on peut observer l'image avec un contraste suffisant) d'un dispositif d'affichage tête haute est typiquement assez faible et que la position des yeux de l'utilisateur peut fortement varier d'un utilisateur à l'autre, il convient de munir le dispositif d'affichage tête haute de moyens permettant à l'utilisateur d'ajuster la direction dans laquelle est renvoyé le faisceau portant les informations à afficher à la hauteur de ses yeux.

Le brevet US 5,394,203 décrit un dispositif d'affichage tête haute comprenant un combineur en forme de lame réfléchissante montée basculante et faisant office de couvercle que l'on rabat lorsque le dispositif n'est pas utilisé. Cependant, étant donné que la lame sert de couvercle, un de ses côtés reste exposé aux influences nuisibles.

La demande WO 2007/057608 présente un dispositif d'affichage tête haute à combineur escamotable. Le combineur est monté sur un support mobile de sorte à pouvoir être déplacé entre une position d'affichage, dans laquelle le combineur se trouve dressé en face de l'utilisateur, et une position de rangement, dans laquelle le combineur est rentré à l'intérieur du boîtier qui protège l'ensemble des composants optiques et mécaniques du dispositif d'affichage tête haute. La fin de course du support mobile portant le combineur peut être ajustée pour obtenir un réglage de l'ange d'inclinaison du combineur et ainsi de l'angle d'inclinaison de l'axe allant des yeux du conducteur à l'image virtuelle.

Cependant, le dispositif d'affichage tête haute de la demande WO 2007/057608 ne permet pas de régler la distance à laquelle est affichée l'image virtuelle. Or, le réglage de la distance de projection est très avantageux du point de vue ergonomique, car il permet d'adapter la position de l'image virtuelle par rapport à l'architecture mécanique d'un véhicule (notamment par rapport aux dimensions du capot). En outre, ce type de réglage permet à l'utilisateur d'adapter l'affichage à ses conditions de vue.

Le document JP 10 333080 divulgue un dispositif d'affichage tête haute avec deux miroirs de déflection sur le chemin optique entre le projecteur et le combineur. Le premier des deux miroirs à partir du projecteur et monté rotatif ou déplaçable en translation pour pouvoir changer la position verticale de l'image virtuelle dans le champ de vision de l'utilisateur.

Le document US 2005/0024490 décrit un dispositif d'affichage tête haute, dans lequel le dernier miroir, c.-à-d. celui qui se trouve dans le champ de vision de l'utilisateur est escamotable. En sa position de rangement, le miroir forme le couvercle du dispositif d'affichage tête haute. La face arrière de ce miroir (c.-à-d. la face supérieure en position de rangement) est équipée d'une couverture pliable. Cette couverture est déployée lorsque le miroir est rabattu, de sorte à donner une apparence de qualité au dispositif. Le miroir peut être réalisé comme combineur ; dans ce cas, la couverture est complètement rétractée lorsque le miroir est en position d'affichage.

Le document US 5,237,455 décrit un dispositif d'affichage tête haute avec un combineur escamotable. L'ouverture par laquelle le combineur peut être sorti et rentré manuellement du boîtier est refermable par un rideau. L'ouverture et la fermeture de ce rideau se fait aussi manuellement.

Un objectif de l'invention est de remédier aux inconvénients énoncés ci-avant.

**Description générale de l'invention**

Un dispositif d'affichage tête haute comprend un projecteur pour générer un faisceau lumineux chargé d'une information à afficher, un combineur ayant une position d'affichage pour afficher l'information dans le champ de vision d'un utilisateur et un système optique définissant un chemin optique entre le projecteur et le combineur lorsque celui-ci se trouve dans sa position d'affichage, pour diriger le faisceau lumineux sur le combineur. Selon l'invention, le système optique comprend au moins un premier et un deuxième miroirs de déviation sur le chemin optique. Le premier miroir est agencé pour recevoir le faisceau lumineux du projecteur et le renvoyer vers le deuxième miroir, celui-ci étant agencé pour renvoyer le faisceau lumineux sur le chemin optique vers le combineur. Le dispositif comprend en outre un système d'actionnement configuré pour ajuster la longueur du chemin optique entre le projecteur et le combineur par positionnement des premier et deuxième miroirs de déviation l'un par rapport à l'autre. Grâce aux dispositions de l'invention, il est possible de régler la distance à laquelle se trouve l'image virtuelle du combineur (distance de projection).

Le système d'actionnement comprend de préférence un mécanisme couplé aussi bien au premier qu'au deuxième miroir. Le mécanisme pourrait être entraîné à la main par l'utilisateur (p.ex. grâce à une manette de réglage reliée au mécanisme). Toutefois, pour plus de confort pour l'utilisateur, le mécanisme est de préférence entraîné par un moteur électrique (p.ex. un servomoteur) que l'utilisateur peut commander à l'aide d'un bouton de commande (p.ex. sur le tableau de bord).

Selon un mode de réalisation avantageux de l'invention, le deuxième miroir est couplé au mécanisme de façon à être déplaçable en translation (de préférence perpendiculairement à sa surface), et le premier miroir est couplé au mécanisme pour pivoter d'un angle déterminé en fonction du déplacement du deuxième miroir. L'angle d'inclinaison du premier miroir est notamment de préférence donné par une fonction linéaire du déplacement du deuxième miroir par rapport à une position de référence. Par ce couplage des premier et deuxième miroirs, on s'assure de ce que le faisceau lumineux arrive au combineur quelle que soit la position des miroirs intermédiaires. En quelque sorte, grâce au premier miroir, on réalise un pointage automatique du faisceau lumineux sur le deuxième miroir et sur le combineur. Lors du réglage de la distance de projection, l'image virtuelle reste donc substantiellement sur le même axe passant par les yeux du conducteur et le combineur.

Le projecteur comprend de préférence un modulateur de lumière dans l'espace (en anglais : « spatial light modulator »), p.ex. une mémoire holographique, dans laquelle les informations à afficher sont stockées sous forme d'hologrammes, ou un afficheur à cristaux liquides rétroéclairé. Dans ce cas, le projecteur comprend avantageusement une source de lumière de rétroéclairage (p.ex. une source laser ou une ou plusieurs diodes luminescentes) agencée pour envoyer à travers l'afficheur à cristaux liquides un faisceau lumineux non encore chargé de l'information à afficher, et dans lequel l'afficheur à cristaux liquides est monté déplaçable transversalement à la direction du faisceau lumineux. Selon une première variante, le faisceau lumineux peut rester immobile lorsque le modulateur de lumière dans l'espace est déplacé. Selon une autre variante, le projecteur est configuré déplaçable en translation dans son ensemble. On note que la translation du modulateur de lumière dans l'espace transversalement à la direction du faisceau permet de régler la position transversale de l'image virtuelle par rapport à l'axe : yeux du conducteur - combineur. Le dispositif comprend de préférence une manette de commande couplée mécaniquement au modulateur de lumière dans l'espace, grâce à laquelle l'utilisateur peut ajuster la position transversale de l'image virtuelle. Alternativement, le modulateur de lumière dans l'espace est déplaçable au moyen d'un moteur électrique (p.ex. un servomoteur) que l'utilisateur peut commander grâce à un bouton ou une molette de commande. Le bouton ou la molette transmettent dans ce cas les consignes de réglage au dispositif d'affichage tête haute (p.ex. via le réseau de communication du véhicule), qui les traduit en un mouvement mécanique. Une variante de l'invention selon laquelle l'utilisateur peut contrôler la distance de projection et la position transversale par un même bouton ou molette de commande est considérée comme particulièrement ergonomique.

Le combineur peut être réalisé en tant que miroir semi-réfléchissant (plan ou courbé) ou combineur diffractif (c.-à-d. un combineur qui dévie la lumière vers l'utilisateur au moyen d'un réseau de diffraction optique, éventuellement en intégrant un agrandissement de l'image virtuelle et/ou un contrôle de niveau de luminance.) Le combineur est avantageusement réalisé en un matériau plastique.

Selon un mode de réalisation très avantageux de l'invention, le combineur est réalisé comme combineur escamotable ayant en plus de sa position d'affichage une position de rangement. Le combineur est alors de préférence relié à un mécanisme articulé configuré pour déplacer le combineur entre la position d'affichage et la position de rangement.

Selon ce mode de réalisation de l'invention, le dispositif d'affichage tête haute comprend de préférence un boîtier dans lequel sont disposés le projecteur, le système optique et le combineur, le boîtier étant doté d'une première ouverture, par laquelle le combineur peut passer lors de son déplacement entre les positions de rangement et d'affichage, et d'une deuxième ouverture, à travers laquelle le faisceau lumineux peut passer du système optique vers le combineur.

De préférence, le boîtier comprend en outre un rideau de fermeture pour fermer la première ouverture lorsque le combineur est dans sa position de rangement.

Il sera apprécié que le mouvement qu'effectue le combineur lors de son passage de la position de rangement à la position d'affichage puisse être conçu de sorte à ce que le combineur et/ou le mécanisme auquel le combineur est relié force (p.ex. en poussant) le rideau hors du chemin du combineur pour libérer le passage par la première ouverture.

Le boîtier comprend de préférence une trappe fermant la deuxième ouverture lorsque le combineur se trouve dans sa position de rangement. Plus avantageusement encore, la trappe est munie d'un espace de logement pour recevoir le rideau lorsque celui-ci est forcé hors du chemin du combineur.

Le mécanisme d'ouverture et de fermeture de la trappe est avantageusement couplé au mécanisme destiné à déplacer le combineur entre la position d'affichage et la position de rangement.

Le dispositif d'affichage tête haute comprend de préférence un moyen de rappel, p.ex. un ressort de rappel, agencé pour accumuler de l'énergie mécanique lorsque le rideau est forcé hors du chemin du combineur et utiliser cette énergie pour rappeler le rideau dans une position de fermeture de la première ouverture lorsque le combineur passe de sa position d'affichage à sa position de rangement.

L'homme du métier notera que le système d'escamotage du combineur et/ou de fermeture de la trappe peut être réalisé indépendamment du système de réglage de la distance de projection décrit plus haut. Cependant, ces deux aspects de l'invention sont combinés de manière particulièrement avantageuse dans le mode de réalisation décrit à titre d'illustration dans la suite.

**Brève description des dessins**

D'autres particularités et caractéristiques de l'invention ressortiront de la description détaillée d'un mode de réalisation avantageux présenté ci-dessous, à titre d'illustration, avec référence aux dessins annexés. Ceux-ci montrent:

Fig. 1 : une vue tridimensionnelle partielle d'un dispositif d'affichage tête haute selon un mode de réalisation préféré de l'invention ;
Fig. 2 : une coupe longitudinale du système d'escamotage du combineur du dispositif de la Fig. 1, avec le combineur dans sa position de rangement ;
Fig. 3 : une coupe longitudinale du système de la Fig. 2, le combineur se trouvant entre sa position de rangement et sa position d'affichage;
Fig. 4 : une vue partielle du système d'ouverture et de fermeture du rideau protégeant le combineur dans sa position de rangement ;
Fig.5 : une vue partielle du système de la Fig. 4, avec le combineur dans sa position d'affichage ;
Fig. 6 : un schéma de principe du système de réglage de la position de l'image virtuelle ;
Fig. 7 : une vue partielle du mécanisme du système de la Fig. 6.

**Description d'une exécution préférée**

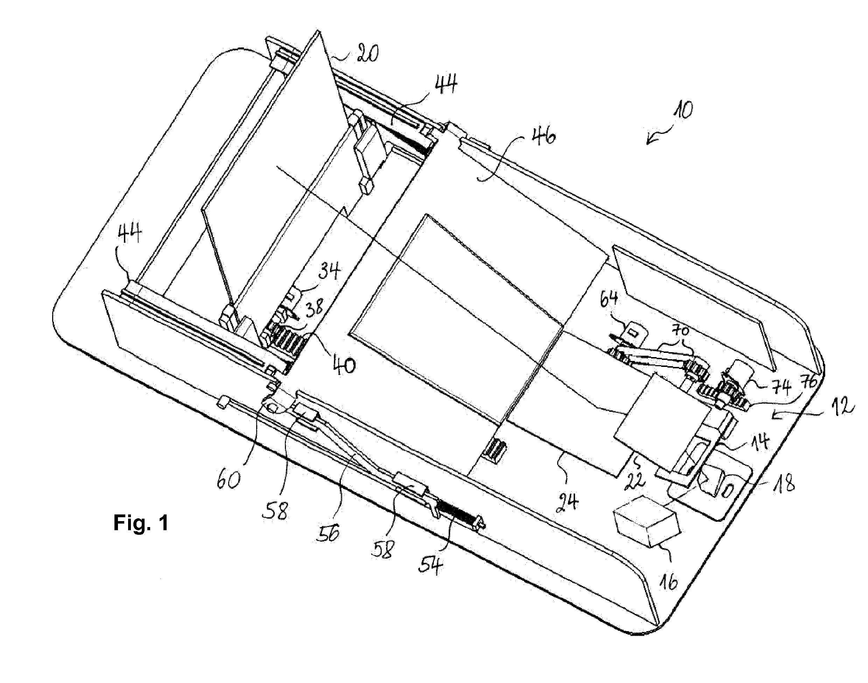

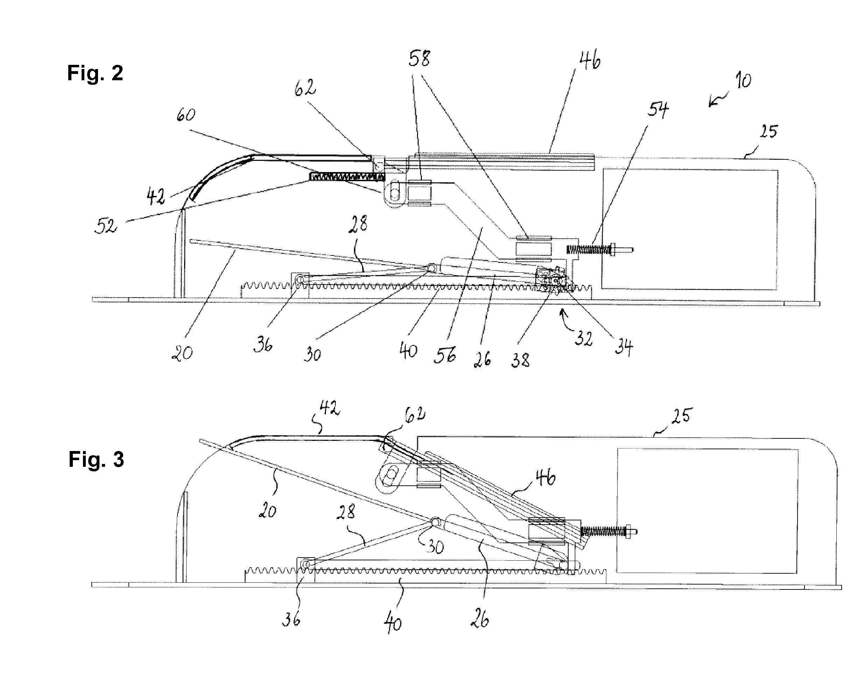

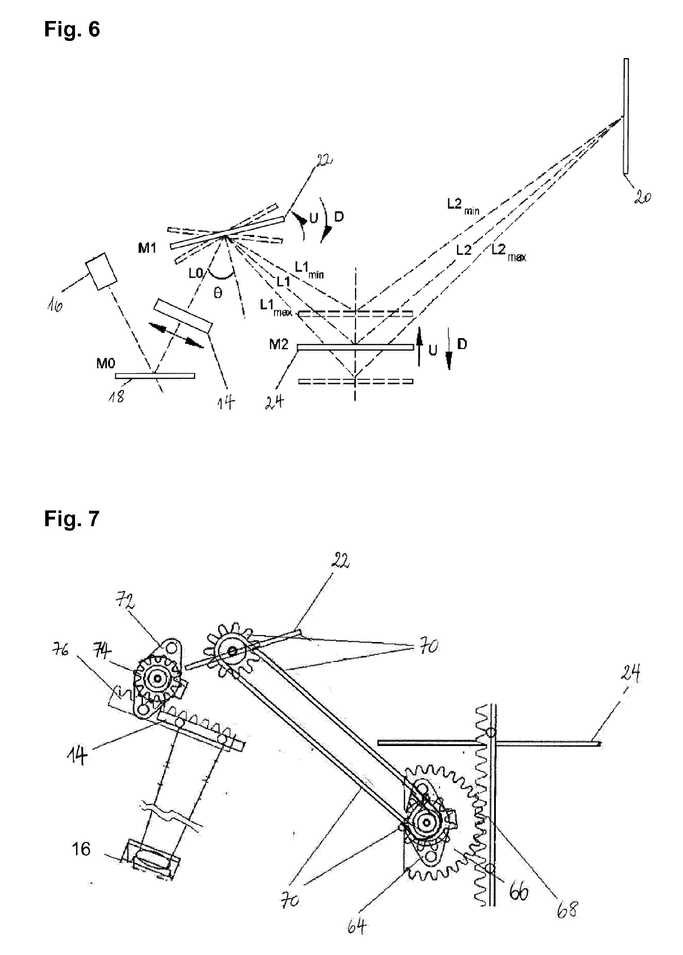

La figure 1 montre une vue perspective d'un dispositif d'affichage tête haute 10 pour un véhicule automobile, selon un mode préféré d'exécution de l'invention. Le dispositif 10 comprend un système d'escamotage du combineur, décrit plus en détail avec référence aux figures 2 à 5, ainsi qu'un système de réglage de la position de l'image virtuelle, décrit plus en détail dans la suite avec référence aux figures 6 et 7.

Le dispositif 10 comprend d'abord un projecteur 12 pour générer le faisceau lumineux chargé de l'image représentant l'information à afficher au conducteur du véhicule. Le projecteur 12 comporte un afficheur à cristaux liquides 14, une source de lumière 16 (cohérente ou non cohérente, en fonction du type de combineur, qui peut être diffractif ou réflectif produisant un faisceau lumineux de rétroéclairage et un miroir 18 renvoyant le faisceau de rétroéclairage provenant de la source 16 à travers l'afficheur à cristaux liquides 14. L'afficheur à cristaux liquides fonctionne en tant que modulateur de lumière dans l'espace et produit l'image qui sera affichée au conducteur. Le chemin optique entre le projecteur 12 et la position d'affichage du combineur 20 est défini par un système optique. Celui-ci comprend un premier miroir de déviation 22 et un deuxième miroir de déviation 24. Le premier miroir 22 est agencé pour recevoir le faisceau lumineux du projecteur 12 et le renvoyer vers le deuxième miroir 24, qui est lui agencé pour renvoyer le faisceau lumineux sur le combineur 20, lorsque celui-ci se trouve dans sa position d'affichage (montrée à la figure 1).

Le combineur 20 est escamotable grâce à un système d'escamotage, montré plus en détail aux figures 2 à 5. En plus de sa position d'affichage, le combineur 20 possède une position de rangement essentiellement couchée à l'intérieur du boîtier 25 du dispositif d'affichage tête haute 10. Le combineur 20 est fixé à un mécanisme articulé qui le déplace entre les positions d'affichage de rangement. Plus précisément, le mécanisme articulé comprend, de part et d'autre du combineur 20, une première bielle 26 et une seconde bielle 28 qui sont jointes par une articulation 30 en une de leur extrémités. L'autre extrémité de la première bielle 26 est logée mobile en rotation sur un premier palier 32 déplaçable en translation par un moteur électrique 34, tandis que l'autre extrémité de la seconde bielle 28 est logée mobile en rotation sur un second palier 36 fixe par rapport au boîtier 25. Le combineur 20 est solidaire de la première bielle 26. Pour amener le combineur depuis sa position de rangement (montrée à la figure 2) à sa position d'affichage, le moteur 34 fait tourner un pignon 38, ce qui entraîne le déplacement du premier palier 32 sur une crémaillère 40 et donc le raccourcissement de la base du triangle dont les sommets sont formés par les paliers 32 et 36 et par l'articulation 30. Il en résulte que le combineur 20 se relève au fur et à mesure que les premier et second paliers 32, 36 se rapprochent l'un de l'autre. Lorsque le combineur 20 est complètement dressé, le moteur 34 s'arrête et bloque le mécanisme articulé en position fléchie. De préférence, La fin de la course du pignon 38 sur la crémaillère 40 est réglable par le conducteur, qui peut ainsi ajuster l'inclinaison du combineur 20 en position d'affichage.

Le boîtier 25 du dispositif 10 comprend une première ouverture, par laquelle le combineur 20 passe lors de son déplacement entre les positions de rangement et d'affichage, et d'une deuxième ouverture, à travers laquelle le faisceau lumineux passe du système optique vers la position d'affichage du combineur 20. Un rideau de fermeture 42 est prévu pour fermer la première ouverture et protéger le combineur 20 contre la poussière lorsque le combineur 20 se trouve dans sa position de rangement.

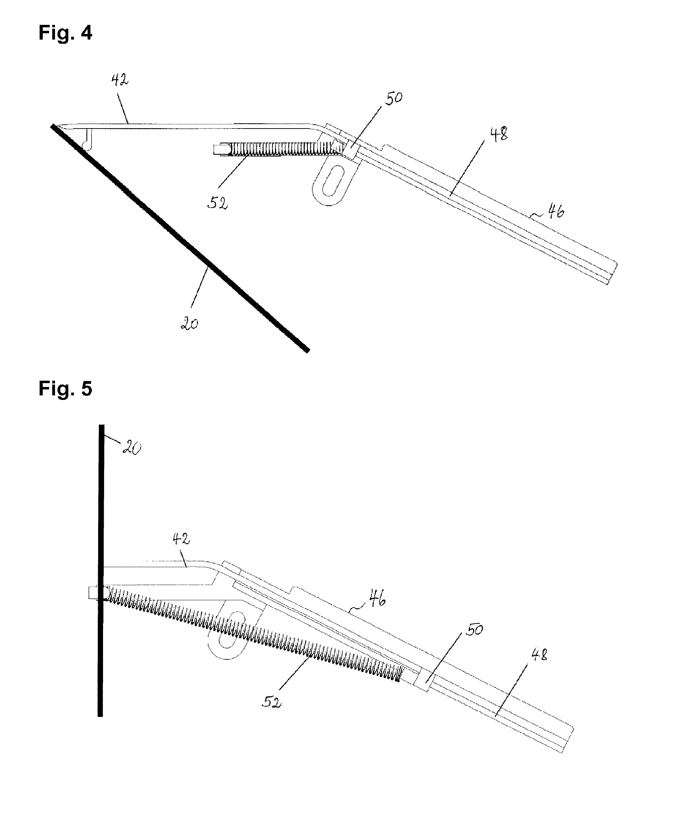

Comme le montrent les figures 4 et 5, le mouvement qu'effectue le combineur 20 lors de son passage de la position de rangement à la position d'affichage est conçu de sorte que le combineur pousse le rideau 42 hors de son chemin pour libérer le passage par la première ouverture. Lorsque le combineur 20 repousse le rideau 42, celui-ci se déplace dans des glissières 44 prévues sur les parois latérales du boîtier 25 (voir figure 1) et sur la trappe 46 prévue pour fermer la deuxième ouverture lorsque le combineur se trouve dans sa position de rangement. Sur le côté inférieur de la trappe 46, les rainures 48 définissent un logement recevant le rideau 42 lorsque celui-ci est déplacé hors du chemin du combineur 20. Quand le rideau 42 est déplacé par le combineur 20, il pousse contre une pièce de fixation 50, fixée à un ressort de rappel 52 qui se tend et accumule de l'énergie mécanique. En position d'affichage du combineur, le rideau 42 reste en butée contre le combineur 20. L'énergie mécanique accumulée dans le ressort de rappel 52 est utilisée pour rappeler le rideau 42 dans la position de fermeture de la première ouverture lorsque le moteur 34 fonctionne dans le sens inverse et le combineur 20 passe de sa position d'affichage à sa position de rangement.

Pour ouvrir et fermer la trappe 46, le dispositif d'affichage tête haute comprend un mécanisme d'ouverture et de fermeture de trappe, couplé au mécanisme destiné à déplacer le combineur 20 entre la position d'affichage et la position de rangement. Le mécanisme d'ouverture et de fermeture de trappe comprend un ressort 54, un élément d'entraînement 56, des glissières 58 et un élément de pivotement 60 solidaire de la trappe 46. Quand le combineur 20 est dans sa position de rangement, le moteur 34 et le palier 32 butent contre l'élément d'entraînement qui se trouve en fin de course et maintient la trappe 46 fermée par l'intermédiaire de l'élément de pivotement 60. Dans cette position, le ressort 54 est comprimé. Quand le moteur 34 et le palier 32 se déplacent en direction du second palier 36 suite à une commande de mise en marche du dispositif d'affichage tête haute 10, le ressort 54 est décomprimé et déplace l'élément d'entraînement 56 dans les glissières 58. Ce déplacement fait tourner l'élément de pivotement 60 autour de son axe 62 et la trappe passe en position ouverte, permettant ainsi le passage du faisceau lumineux en provenance du projecteur 12.

Le dispositif d'affichage tête haute 10 comporte en outre un système de réglage de la position de l'image virtuelle (figures 6 et 7). La distance de projection de l'image virtuelle est réglable au moyen d'un système d'actionnement des miroirs de déviation 22 et 24. La position verticale de l'image virtuelle peut en outre être ajustée par un système de translation de l'afficheur à cristaux liquides 14.

Le principe de l'ajustage de la distance de projection autour d'une distance nominale est expliqué avec référence à la figure 6. L'image comprenant les informations à afficher est engendrée par le projecteur 12. La longueur p du chemin optique entre le projecteur et le combineur (en position d'affichage) est donnée par :

$$p = L0 + L1 + L2,$$

où L0 désigne la distance entre le projecteur et le miroir 22 (aussi M1 sur la figure 6), L1 la distance entre le miroir 22 et le miroir 24 (aussi M2), et L2 la distance entre le miroir 24 et le combineur 20.

La distance de l'image virtuelle du combineur $D_{iv}$ peut être approximée avec une précision suffisante par le produit de la longueur du chemin optique entre le projecteur et le combineur p et le facteur d'agrandissement g du combineur :

$$D_{iv}=p\cdot g$$

Pour régler la distance de projection, on peut donc ajuster la longueur du chemin optique entre le projecteur 12 et le combineur 20. Dans le dispositif 10, on ajuste la longueur du chemin optique p par positionnement des premier et deuxième miroirs de déviation 22 et 24 l'un par rapport à l'autre.

On peut distinguer deux cas :

o Lorsqu'on veut réduire la distance de projection (par rapport à la distance de projection nominale), le miroir 24 est déplacé vers le haut sur la figure 6 (perpendiculairement à sa surface) et le miroir 22 est simultanément tourné dans le sens contraire des aiguilles d'une montre.

o Lorsqu'on veut augmenter la distance de projection (par rapport à la distance de projection nominale), le miroir 24 est déplacé vers le bas sur la figure 6 (perpendiculairement à sa surface) et le miroir 22 est simultanément tourné dans le sens des aiguilles d'une montre.

Grâce à cela, on peut varier la distance de projection entre une valeur minimale $D_{iv\_min}$ et une valeur maximale $D_{iv\_max}$, définies respectivement par :

$$D_{iv\_min}=g\cdot(L0+L1_{min}+L2_{min})$$

et

$$D_{iv\_min}=g\cdot(L0+L1_{max}+L2_{max}).$$

Les positions extrêmes des miroirs 22 et 24 sont montrées par des lignes discontinues à la figure 6.

On positionne les miroirs 22 et 24 par l'intermédiaire d'un mécanisme couplé aussi bien au premier qu'au deuxième miroir (voir figure 7). Le mécanisme est entraîné par un moteur électrique 64 que l'utilisateur peut commander à l'aide d'un bouton de commande (p.ex. sur le tableau de bord).

Le deuxième miroir 24 est couplé au mécanisme de façon à être déplaçable en translation perpendiculairement à sa surface réflective. Le premier miroir 22 est couplé au mécanisme pour pivoter d'un angle θ déterminé en fonction du déplacement du deuxième miroir 24. Comme illustré à la figure 7, le miroir 24 est fixé sur un support mobile qui peut glisser perpendiculairement à la surface réflective du miroir 24. Le miroir 24 est positionné à l'aide du moteur électrique 64 qui entraîne un pignon 66 s'engrenant dans une crémaillère 68 fixée sur le support mobile portant le miroir 24. Lorsque le moteur 64 tourne, il fait tourner en même temps le premier miroir 22, par l'intermédiaire d'un mécanisme à engrenage et courroie 70. Les rapports de transmission entre le moteur 64 et le deuxième miroir 22, d'une part, et entre le moteur 64 et le miroir 22, d'autre part, sont choisis de sorte à ce que l'on réalise un pointage automatique du faisceau lumineux sur le deuxième miroir 24 et sur le combineur 20 et on assure donc que le faisceau lumineux arrive substantiellement au même endroit sur le combineur 20 quelle que soit la position des miroirs 22 et 24 intermédiaires. Lors du réglage de la distance de projection, le conducteur ne voit donc pas l'image virtuelle se déplacer verticalement ou latéralement.

Pour positionner l'image virtuelle verticalement, l'afficheur à cristaux liquides 14 peut être déplacé transversalement par rapport à la direction du faisceau lumineux de rétroéclairage en provenance de la source de lumière 16. (La figure 7 ne montre pas le miroir de déviation 18 entre la source de lumière 16 et l'afficheur à cristaux liquides 14.) Le déplacement l'afficheur à cristaux liquides 14 est réalisé à l'aide d'un moteur électrique 72 qui entraîne un système de pignon 74 et de crémaillère 76. Comme le déplacement l'afficheur à cristaux liquides 14 est dans un plan perpendiculaire au faisceau lumineux, il n'en résulte pas de variation notable de la distance de projection de l'image virtuelle.

Le conducteur peut donc régler la distance de projection et la position verticale de l'image virtuelle de manière indépendante.

Pour commander les différents moteurs électriques (qui peuvent être des servomoteurs), le dispositif d'affichage tête haute 10 comprend une unité de commande (non représentée dans les figures) présentant une ou plusieurs interfaces pour l'interaction avec l'utilisateur (p.ex. des boutons de commande). Dans l'exemple illustré dans les figures, l'utilisateur peut notamment régler

o l'inclinaison du combineur (déterminée par la fin de course du pignon 38 sur la crémaillère 40), ce qui lui permet d'ajuster l'affichage à sa taille (ou, plus précisément, la hauteur de ses yeux) ;

o La distance de projection (déterminée par la position des miroirs 22 et 24); et

o La position verticale de l'image virtuelle (déterminée par la position de l'afficheur à cristaux liquides 14).

On appréciera que le dispositif d'affichage tête haute 10 se présente sous une forme compacte, facile à intégrer, tout en offrant la facilité d'ajustage aux besoins individuels de l'utilisateur.

**Légende:**

| | | | |
|---|---|---|---|
| 10 | dispositif d'affichage tête haute | 70 | mécanisme à engrenage et courroie |
| 12 | projecteur | 72 | moteur électrique |
| 14 | afficheur à cristaux liquides | 74 | pignon |
| 16 | source de lumière | 76 | crémaillère |
| 18 | miroir | | |
| 20 | combineur | | |
| 22 | premier miroir de déviation | | |
| 24 | deuxième miroir de déviation | | |
| 25 | boîtier | | |
| 26 | première bielle | | |
| 28 | seconde bielle | | |
| 30 | articulation | | |
| 32 | premier palier | | |
| 34 | moteur électrique | | |
| 36 | second palier | | |
| 38 | pignon | | |
| 40 | crémaillère | | |
| 42 | rideau de fermeture | | |
| 44 | glissière | | |
| 46 | trappe | | |
| 48 | rainure | | |
| 50 | pièce de fixation | | |
| 52 | ressort de rappel | | |
| 54 | ressort | | |
| 56 | élément d'entraînement | | |
| 58 | glissière | | |
| 60 | élément de pivotement | | |
| 62 | axe de pivotement | | |
| 64 | moteur électrique | | |
| 66 | pignon | | |
| 68 | crémaillère | | |

**Revendications**

1. Dispositif d'affichage tête haute (10), comprenant :

   un projecteur (12) pour générer un faisceau lumineux chargé d'une information à afficher ;
   un combineur (20) ayant une position d'affichage pour afficher l'information dans le champ de vision d'un utilisateur ;
   un système optique définissant un chemin optique entre le projecteur (12) et le combineur (20) lorsque celui-ci se trouve dans sa position d'affichage, pour diriger le faisceau lumineux sur le combineur (20) ;
   le système optique comprenant au moins un premier et un deuxième miroirs de déviation (22, 24) sur le chemin optique, le premier miroir (22) étant agencé pour recevoir le faisceau lumineux du projecteur (12) et le renvoyer vers le deuxième miroir (24), celui-ci étant agencé pour renvoyer le faisceau lumineux sur le chemin optique vers le combineur (20),
   le dispositif comprenant un système d'actionnement configuré pour ajuster la longueur du chemin optique entre le projecteur (12) et le combineur (20) par positionnement des premier et deuxième miroirs de déviation (22, 24) l'un par rapport à l'autre,

**caractérisé en ce que**

le combineur (20) est réalisé comme combineur escamotable ayant en plus de sa position d'affichage une position de rangement.

2. Dispositif (10) selon la revendication 1, dans lequel le système d'actionnement comprend un mécanisme couplé aux premier et deuxième miroirs (22, 24), le mécanisme étant de préférence entraîné par un moteur (34).

3. Dispositif (10) selon la revendication 2, dans lequel le deuxième miroir (24) est couplé au mécanisme de façon à être déplaçable en translation, le premier miroir (22) étant couplé au mécanisme pour pivoter d'un angle déterminé en fonction du déplacement du deuxième miroir (24).

4. Dispositif (10) selon l'une quelconque des revendications 1 à 3, dans lequel le projecteur (12) comprend un afficheur à cristaux liquides rétroéclairé (14).

5. Dispositif (10) selon l'une quelconque des revendications 1 à 4, dans lequel le projecteur (12) comprend une source de lumière de rétroéclairage (16) agencée pour envoyer à travers l'afficheur à cristaux liquides (14) un faisceau lumineux non encore chargé de l'information à afficher, et dans lequel l'afficheur à cristaux liquides (14) est monté déplaçable transversalement à la direction du faisceau lumineux.

6. Dispositif (10) selon l'une quelconque des revendications 1 à 5, dans lequel le combineur (20) est un miroir semi-réfléchissant ou un combineur diffractif.

7. Dispositif (10) selon l'une quelconque des revendications 1 à 6, dans lequel le combineur est relié à un mécanisme articulé (26, 28, 30, 32, 36) configuré pour déplacer le combineur (20) entre la position d'affichage et la position de rangement.

8. Dispositif (10) selon l'une quelconque des revendications 1 à 7, comprenant un boîtier (25) dans lequel sont disposés le projecteur (12), le système optique et le combineur (20), le boîtier (25) comprenant une première ouverture, par laquelle le combineur (20) peut passer lors de son déplacement entre les positions de rangement et d'affichage, et une deuxième ouverture, à travers laquelle le faisceau lumineux peut passer du système optique vers le combineur (20).

9. Dispositif (10) selon la revendication 8, dans lequel le boîtier (25) comprend un rideau de fermeture (42) pour fermer la première ouverture lorsque le combineur (20) se trouve dans sa position de rangement.

10. Dispositif (10) selon la revendication 9, dans lequel le mouvement qu'effectue le combineur lors de son passage de la position de rangement à la position d'affichage est conçu de sorte à ce que le combineur et/ou le mécanisme auquel le combineur est relié force le rideau hors du chemin du combineur pour libérer le passage par la première ouverture.

11. Dispositif (10) selon la revendication 10, dans lequel le boîtier (25) comprend une trappe (46) pour fermer la deuxième ouverture lorsque le combineur (20) se trouve dans sa position de rangement, la trappe (46) comprenant un logement pour recevoir le rideau (42) lorsque celui-ci est forcé hors du chemin du combineur (20).

12. Dispositif (10) selon la revendication 11, comprenant un mécanisme d'ouverture et de fermeture de la trappe (46) qui est couplé au mécanisme (26, 28, 30, 32, 36) destiné à déplacer le combineur (20) entre la position d'affichage et la position de rangement.

13. Dispositif (10) selon l'une quelconque des revendications 10 à 12, comprenant un moyen de rappel, de préférence un ressort de rappel (52), agencé pour accumuler de l'énergie mécanique lorsque le rideau (42) est forcé hors du chemin du combineur (20) et pour rappeler le rideau (42) dans une position de fermeture de la première ouverture lorsque le combineur (20) passe de sa position d'affichage à sa position de rangement.

Fig. 1

Fig. 2

Fig. 3

EP 2 682 803 A2

**Fig. 4**

**Fig. 5**

11

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5394203 A
- WO 2007057608 A
- JP 10333080 A
- US 20050024490 A
- US 5237455 A